Europäisches Patentamt

European Patent Office

Office européen des brevets

(11) Veröffentlichungsnummer: **0 047 436**
A1

## EUROPÄISCHE PATENTANMELDUNG

(21) Anmeldenummer: **81106640.6**

(22) Anmeldetag: **26.08.81**

(51) Int. Cl.³: **A 61 C 8/00**

(30) Priorität: **10.09.80 DE 3034086**

(43) Veröffentlichungstag der Anmeldung: **17.03.82**
**Patentblatt 82/11**

(84) Benannte Vertragsstaaten: **AT BE CH DE FR GB IT LI NL
SE**

(71) Anmelder: **Riess, Guido, Dr. med. dent., Marienplatz 7,
D-8100 Garmisch-Partenkirchen (DE)**

(72) Erfinder: **Riess, Guido, Dr. med. dent., Marienplatz 7,
D-8100 Garmisch-Partenkirchen (DE)**

(74) Vertreter: **Körber, Wolfhart, Dr. et al, Patentanwälte
Dipi.Ing.H.Mitscherlich, Dipl.Ing.K.Gunschmann,
Dr.rer.nat.W.Körber, Dipl.Ing.J.Schmidt-Evers
Steinsdorfstrasse 10, D-8000 München 22 (DE)**

(54) **Verankerungsvorrichtung für die Befestigung von Zähnen oder Zahnprothesen.**

(57) Um mit einfachen Mitteln die Erhaltung der dental-parododontalen Funktionseinheit (vorhandene Zahnteile mit Wurzel) insbesondere für implantologisch-prothetische Zwecke zu erlauben, wird vorgeschlagen, ein in den Kiefer-knochen im Bereich der Wurzelspitze implantierbarer Verbundkörper (1) aus einem bioreaktiven Verbundwerkstoff auf Calciumphosphatbasis mit einem in den Verbundkörper eingelagerten und sich über einen begrenzten Oberflächenbereich des Verbundkörpers erstreckenden Einsatzkörper (3) aus einem elastischen, biokompatiblen Werkstoff, in welchen ein den Pulpen- und Wurzelkanal des Zahnes durchragender Fixationsstift (4) einschraubbar ist.

0047436

- 1 -

Verankerungsvorrichtung für die Befestigung
von Zähnen oder Zahnprothesen

Die Erfindung bezieht sich auf eine Verankerungsvorrichtung für die Befestigung von Zähnen oder Zahnprothesen
im Kieferknochen unter Verwendung vorhandener Zahnteile
mit Wurzel.

Der physiologische Wert einer dental-parodontal (Zahn-
und Wurzelhaut) funktionstüchtigen Einheit ist nach dem
gegenwärtigen Kenntnisstand der Zahnmedizin nicht zu ersetzen. Ihre komplexen Vorteile bestehen aus ektodermaler
Integrität von Zahnhartsubstanz und Epitel, sowie aus der
dentalen und parodontalen Innervation mit zentraler
Steuerung. Darüber hinaus ergibt sich ein abgestimmter
Zusammenhang zwischen Aufbau und Elastizität der Zahnhartsubstanz und dem Verhalten der Wurzelhaut bei der
Belastung.

Somit stellt diese Einheit ein Organ dar, das letztlich Kräfte unter optimalen Bedingungen in den Kieferknochen weiterleiten kann. Es ist daher erstrebenswert, auch beschädigte und nicht mehr lebensfähige, nach bisheriger Praxis zu entfernende dental-parodontale Einheiten mit allen Mitteln zu erhalten, besondern wenn ihnen im Rahmen einer implantologisch-prothetischen Rekonstruktion tragende und steuernde Funktion zugewiesen werden kann.

Der Erfindung liegt die Aufgabe zugrunde, eine Verankerungsvorrichtung zu schaffen, welche mit einfachen Mitteln die Erhaltung der vorstehend genannten dental-parodontalen Funktionseinheit insbesondere für implantologisch-prothetische Zwecke erlaubt.

Zur Lösung dieser Aufgabe ist die Verankerungsvorrichtung der eingangs genannten Art gekennzeichnet durch einen in den Kieferknochen im Bereich der Wurzelspitze implantierbaren Verbundkörper aus einem bioreaktiven Verbundwerkstoff auf Calciumphosphatbasis mit einem in den Verbundkörper eingelagerten und sich über einen begrenzten Oberflächenbereich des Verbundkörpers erstreckenden Einsatzkörper aus einem elastischen, biokompatiblen Werkstoff, in welchem ein den Pulpen- und Wurzelkanal des Zahnes durchragender Fixationsstift einschraubbar ist.

Als Implantatkörper ausgebildete Verbundkörper unter Verwendung von Calciumphosphatkeramik als von Knochengewebe resorbierbare und somit bioreaktive Substanz sind in verschiedenen Ausgestaltungen bereits bekannt. Da Calciumphosphatkeramik für sich für implantologische Zwecke mechanisch nicht stabil genug ist, wird das Calciumphosphat in geeigneten Anteilen in Verbundkörper aus Kunststoff oder in Sinter-Metallkörper eingelagert.

Nach der Erfindung werden erstmals derartige Verbundkörper als vollständig in den Kieferknochen zu implantierende Haltekörper ausgebildet, damit sie zur nachträglichen Befestigung eines den aufgebohrten Pulpenkanal des Zahnes durchsetzenden Fixationsstiftes dienen können. Dazu sind die Verbundkörper mit einem Einsatzkörper aus elastischem, biokompatiblen Werkstoff versehen, in welchen der Fixationsstift nach der Implantation des Verbundkörpers eingeschraubt werden kann. Die elastische Ausbildung des Einsatzkörpers gewährleistet, daß die mit dieser Verankerungsvorrichtung erhaltene dentale-parodontale Funktionseinheit in ihrer kraftaufnehmenden Funktion nicht gestört wird.

In zweckmäßiger Ausgestaltung der Erfindung ist der Verbundkörper als einseitig halbkugelig abgerundeter, schwach konisch zulaufender Zylinderkörper ausgebildet, in dessen Mantelfläche der Einsatzkörper eingelagert ist und einen etwa rechteckigen Manteloberflächenbereich des Zylinderkörpers ausfüllt. Diese Gestaltung ermöglicht eine einfache Implantierung wie nachstehend beispielsweise beschrieben. Die Erstreckung des Einsatzkörpers über einen gewissen Manteloberflächenbereich gestattet es, den Verbundkörper nicht millimetergenau in den Kieferknochen implantieren zu müssen, da auch bei geringfügig verschiedenen Lagen des Verbundkörpers gegenüber der Zahnwurzel bzw. gegenüber dem aufgebohrten Pulpenkanal der Fixationsstift sicher in den Einsatzkörper eingeschraubt werden kann.

In weiterer zweckmäßiger Ausgestaltung der Erfindung erstreckt sich der Einsatzkörper tiefer als der halbe Durchmesser des Zylinderkörpers und ist in einer leicht hinterschnittenen Ausnehmung in dem Zylinderkörper angeordnet. Der Fixationsstift ist zumindest an seinem vorderen, in den Einsatzkörper einzuschraubenden Ende als selbstschneidender Gewindestift ausgebildet und zweckmäßig mit Phosphatzement beschichtet.

Nachstehend wird beispielsweise das Anbringen einer erfindungsgemäßen Verankerungsvorrichtung beschrieben:

Der Vorgang beginnt mit der Reinigung und Erweiterung des Pulpenkanales des zu behandelnden Zahnes. Anschließend wird die Wurzelspitze chirurgisch entfernt, wobei innengekühlte, schneidende und selbstreinigende Instrumente verwendet werden. Danach erweitert ein innengekühlter Spiralbohrer den Wurzelkanal auf beispielsweise 2,1 mm. Ein ebenfalls innengekühlter Dreischneidenfräser schafft nun im apikalen Bereich ein kongruentes und der Größe des zu implantierenden Verbundkörpers entsprechendes Lager für den bioreaktiven, als schwach konisch zulaufender Zylinderkörper ausgebildeten Verbundkörper.

Von entscheidender Bedeutung ist die Abräumung des beim Fräsen anfallenden Knochenmehls aus den Spongiosahöhlen und somit die Freilegung der Osteoplasten und der Öffnung der Blutgefäße. Der Zylinderkörper wird in das als Höhlung ausgebildete Lager gedrückt und mit kurzen Hammerschlägen stramm in diesem seinem Kieferknochen-

- 5 -

lager verankert. Damit ist der kritische Bereich der Wurzelspitze eines Zahnes mit bioreaktivem Material ausgefüllt und es entfallen die Probleme eines makroskopisch erkennbaren Blutkroagulums.

Der zylindrische schwach konische Verbundkörper ist einerseits in der labialen bzw. bukkalen Kortikalis verankert, andererseits findet er strammen Halt in der ausgedehnten Spongiosaoberfläche, die bei der beschriebenen Knochenpräparation sofort mit dem Verbundkörpermaterial positiv zu reagieren beginnt. Anschließend erfolgt durch den erweiterten Wurzelkanal einen Vorbohrung in den Einsatzkörper des Verbundkörpers mit einem Spiralbohrer kleineren Durchmessers, um danach den vorzugsweise selbstschneidend ausgebildet und mit Phosphatzement beschichteten Fixationsstift von beispielsweise 2 mm Durchmesser einschrauben zu können. Die labialbukkal überstehende Substanz des implantierten Verbundkörpers wird abgetragen und die Wunde mit aufstellenden Nähten verschlossen. Zum Schluß kürzt man den zweckmäßig zunächst mit einer Handhabe versehenen Fixationsstift und versorgt den Zahn provisorisch unter Infraoklusion.

Diese Methode wurde an drei Schäferhunden zwischen einem Jahr und zwei Jahren Alter unter Vollnarkose durchgeführt. Einmal erfolgte der Eingriff an der mesialen Wurzel eines hämitormierten Zahnes P4 des Unterkiefers, zweimal am unteren Caninus. Die Tiere erhielten anfangs Weichfutter, nach sechs Wochen gemischtes Futter. Die Zähne wurden, da sie im Gegensatz zum klinischen Fall von Anfang an fest waren, in ihrer Okklusion belassen.

- 6 -

Eine Lockerung während des experimentellen Zeitraumes wurde nicht bemerkt. Ansonsten war der gesamte Heilungsverlauf unauffällig und komplikationslos.

Eine beispielsweise Ausführungsform einer erfindungsgemäßen Verankerungsvorrichtung wird im folgenden anhand der beigefügten Zeichnungen näher beschrieben. Es zeigen

Figur 1      einen Verbundkörper in Ansicht

Figur 2      eine Schnittansicht entlang der Linie II-II in Figur 1

Figur 3      eine Schnittansicht entlang der Linie III-III in Figur 2 und

Figur 4      schematisch im Schnitt einen im Kieferknochen sitzenden Zahn mit erfindungsgemäßer Verankerungsvorrichtung gesehen in Längsrichtung des Kieferknochens, wobei die Größenverhältnisse von Zahn, Kieferknochen, Verbundkörper und Fixationsstift nicht maßstabgerecht sind.

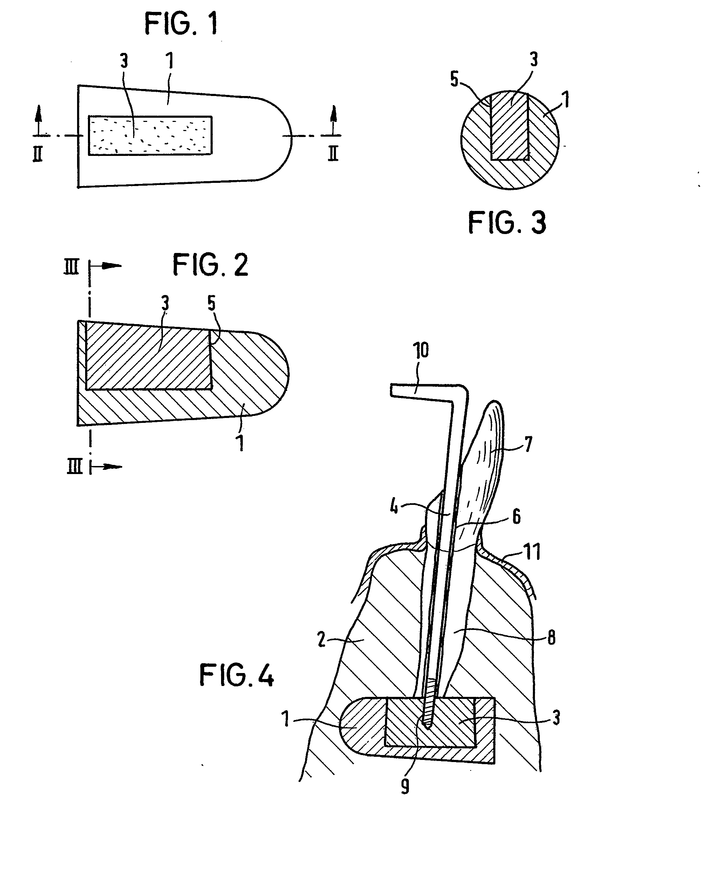

Die Verankerungsvorrichtung besteht aus einem Verbundkörper 1 aus einem Verbundmaterial auf Kunststoffbasis oder Metallbasis mit eingelagerter resorbierbarer, bioreaktiver Calciumphosphatkeramik für das bindegewebsfreie Einwachsen in Knochengewebe. Der Verbundkörper 1 hat für die in Figur 4 schematisch dargestellte Implantierung in einen Kieferknochen 2 eine einseitig halbkugelig abgerundete, schwach konisch zulaufende Zylinderform. In dem Verbundkörper 1 ist ein Einsatzkörper 3 aus einem biokompatiblen elastischen Werkstoff angeordnet, in welchem ein Fixationsstift 4 (Figur 4) einschraubbar ist. Der Einsatzkörper 3 ist in einer leicht hinterschnittenen Ausnehmung 5 innerhalb des Verbundkörpers 1 angeordnet und erstreckt sich in etwa Rechteckform über einen begrenzten Manteloberflächenbereich des Verbundkörpers 1.

Gemäß Figur 4 ist der durch den aufgebohrten Pulpenkanal 6 des Zahnes 7 mit Zahnwurzel 8 ragende Fixationsstift 4 an seinem unteren Ende mit einem vorzugsweise selbstschneidenden Gewinde 9 versehen, mit welchem er in den Einsatzkörper 3 des Verbundkörpers 1 einschraubbar ist. Der Fixationsstift 4 ist für den Einschraubvorgang zweckmäßig mit einer Handhabe 1o versehen, die später zusammen mit nicht gebrauchten vorstehenden Teilen des Stiftes 4 entfernt werden kann. Die Gingiva ist bei 11 angedeutet.

Der das zentrale Element der erfindungsgemäßen Verankerungsvorrichtung bildende Verbundkörper besteht beispielsweise aus Tricalciumphosphat 13oo und Polymethylmetacrylat im Verhältnis 5o:5o. Die Abmessungen betragen beispielsweise 5 mm im Durchmesser und 7 mm in der Länge. Im Druckversuch ergaben sich beispielsweise 82 $N/mm^2$ maximale Belastung. Die Wasseraufnahme betrug beispielsweise o,35 %.

ANSPROCHE

1. Verankerungsvorrichtung für die Befestigung von Zähnen oder Zahnprothesen im Kieferknochen unter Verwendung vorhandener Zahnteile mit Wurzel, gekennzeichnet durch einen in den Kieferknochen (2) im Bereich der Wurzelspitze implantierbaren Verbundkörper (1) aus einem bioreaktiven Verbundwerkstoff auf Calciumphosphatbasis mit einem in den Verbundkörper (1) eingelagerten und sich über einen begrenzten Oberflächenbereich des Verbundkörpers erstreckenden Einsatzkörper (3) aus einem elastischen, biokompatiblen Werkstoff, in welchem ein den Pulpen- und Wurzelkanal (6) des Zahnes (7) durchragender Fixationsstift (4) einschraubbar ist.

2. Vorrichtung nach Anspruch 1, dadurch gekennzeichnet, daß der Verbundkörper (1) als Kunststoffverbundkörper bestehend aus Polymethylmetacrylat mit eingelagertem Calciumphosphat ausgebildet ist.

3. Vorrichtung nach Anspruch 1, dadurch gekennzeichnet, daß der Verbundkörper (1) als Sinter-Metallverbundkörper bestehend aus einem biokompatiblen Metall, wie Titan, Gold, Platin oder dergleichen mit eingelagertem Calciumphosphat ausgebildet ist.

4. Vorrichtung nach einem der vorhergehenden Ansprüche, dadurch gekennzeichnet, daß der Einsatzkörper (3) aus einem Polysulfon, Polycarbonat, Polypropylen oder dergleichen besteht.

5. Vorrichtung nach einem der vorhergehenden Ansprüche, dadurch gekennzeichnet, daß der Verbundkörper (1) als einseitig halbkugelig abgerundeter, schwach konisch zulaufender Zylinderkörper ausgebildet ist, in dessen Mantelfläche der Einsatzkörper (3) eingelagert ist und einen etwa rechteckigen Manteloberflächenbereich des Zylinderkörpers ausfüllt.

6. Vorrichtung nach Anspruch 5, dadurch gekennzeichnet, daß sich der Einsatzkörper (3) tiefer als der halbe Durchmesser des Zylinderkörpers (1) in diesen erstreckt und in einer leicht hinterschnittenen Ausnehmung (5) in dem Zylinderkörper (1) angeordnet ist.

7.  Vorrichtung nach einem der vorhergehenden Ansprüche, dadurch gekennzeichnet, daß der Fixationsstift
(4) zumindest an seinem vorderen, in den Einsatzkörper
(3) einzuschraubenden Ende als selbstschneidender Gewindestift (9) ausgebildet ist.

8.  Vorrichtung nach Anspruch 7, dadurch gekennzeichnet, daß der Fixationsstift (4) mit Phosphatzement
beschichtet ist.

0047436

1/1

FIG. 1

FIG. 3

FIG. 2

FIG.4

Europäisches
Patentamt

**EUROPÄISCHER RECHERCHENBERICHT**

Nummer der Anmeldung

EP 81 10 6640

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 4 084 318 (McEACHERN) <br> * Spalte 2, Zeilen 24-48; Figuren 2,3 * <br> -- | 1,7 | A 61 C 8/00 |
| | EP - A - 0 006 544 (BATTELLE-INSTITUT) <br> * Zusammenfassung * <br> -- | 3 | |
| | US - A - 3 934 347 (LASH) <br> * Spalte 2, Zeilen 60-68; Figur 2 * <br> -- | 1,6 | RECHERCHIERTE SACHGEBIETE (Int. Cl.³) <br><br> A 61 C |
| A | DE - A - 2 127 967 (TOSTI) <br> * Anspruch 1; Figur 4 * <br> ----- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-11-1981 | VANRUNXT |

EPA form 1503.1   06.78